# EUROPÄISCHE PATENTANMELDUNG

(11) **EP 3 906 782 A1**
(43) Veröffentlichungstag der Anmeldung: **10.11.2021**
(21) Anmeldenummer: 21171119.7
(22) Anmeldetag: 29.04.2021
(51) Int. Cl.: A01M 1/20

(54) **HEIZVORRICHTUNG ZUR VERWENDUNG IN EINEM BEHÄLTER MIT EXPLOSIONSFÄHIGER ATMOSPHÄRE, INSBESONDERE ZUR SCHÄDLINGSBEKÄMPFUNG UND/ODER AUSTROCKNUNG, UND VERFAHREN ZUR HERSTELLUNG EINES WÄRMETAUSCHKÖRPERS EINER HEIZVORRICHTUNG**

(30) Priorität: 06.05.2020 DE 102020112163
(71) Anmelder: Hofmeir, Martin, 85296 Fahlenbach (DE)
(72) Erfinder: Hofmeir, Martin, 85296 Fahlenbach (DE)
(74) Vertreter: Würmser, Julian

(57) **Zusammenfassung**

Die vorliegende Erfindung betrifft eine Heizvorrichtung zur Verwendung in einem Behälter mit explosionsfähiger Atmosphäre, insbesondere zur Schädlingsbekämpfung, umfassend:
• ein Gehäuse (51), das mindestens eine Lufteinlassöffnung (52) und mindestens eine Luftauslassöffnung (53) aufweist;
• einen Wärmetauschkörper (10) mit sich radial zu einem Grundkörper (11) erstreckenden Wärmetauscherflügeln (12), wobei der Wärmetauschkörper (10) mindestens ein Heizelement (15), das sich vorzugsweise in einer Längsrichtung (L) des Wärmetauschkörpers (10) erstreckt, umfasst; und
• eine Strömungsmaschine (40) zur Erzeugung einer Luftströmung im Inneren des Gehäuses (51), wobei eine Luftströmungsrichtung innerhalb des Gehäuses (51) von der Lufteinlassöffnung (52) über den Wärmetauschkörper (10) zur Luftauslassöffnung (53) führt.

## Beschreibung

Die Erfindung betrifft eine Heizvorrichtung zur Verwendung in einem Behälter mit explosionsfähiger Atmosphäre, insbesondere zur Schädlingsbekämpfung, nach dem Oberbegriff des Patentanspruchs 1 bzw. ein Verfahren zur Herstellung eines Wärmetauschkörpers einer Heizvorrichtung.

Behälter wie beispielsweise Silos werden in industriellen Verarbeitungsanlagen für verschiedene Schüttgüter und zu deren Weiterverarbeitung eingesetzt. Insbesondere in der Lebensmittelindustrie sind viele der eingesetzten Schüttgüter häufig anfällig für Schädlinge. Befallen Schädlinge einen Behälter, in dem beispielsweise Mehl zwischengelagert wird, kann dies zu enormen Schäden finanzieller Art führen. Es sind zahlreiche Mittel bekannt, Schädlinge durch chemische Substanzen zu bekämpfen. Allerdings ist der Einsatz derartiger Substanzen in vielen Bereichen unerwünscht oder ungeeignet, wie beispielsweise in der Lebensmittelindustrie oder in der Landwirtschaft. Generell sind auch Verfahren bekannt, Schädlinge wie Insekten, Milben oder Pilze durch Ausheizen zu bekämpfen. Speziell in Behältern in denen staubartige Stoffe gelagert sind oder gelagert waren, ist ein Heizvorgang aber hochriskant, da es zu einer Entzündung feinverteilter Stoffpartikeln in der Behälteratmosphäre kommen kann, was eine (Staub-)Explosion zur Folge hat.

Der Erfindung liegt daher die Aufgabe zugrunde, eine Heizvorrichtung bereitzustellen, die es ermöglicht, einen Behälter mit explosionsfähiger Atmosphäre unter sicheren Bedingungen zu heizen, um so Schäden an Personen oder Sachen zu vermeiden. Der Erfindung liegt zudem die Aufgabe zugrunde, ein Verfahren zur Herstellung eines entsprechenden Wärmetauschkörpers für die Heizvorrichtung bereitzustellen.

Diese Aufgabe wird erfindungsgemäß durch die Gegenstände gemäß den Ansprüchen 1 und 13 gelöst.

Insbesondere wird die Aufgabe gelöst, durch eine Heizvorrichtung zur Verwendung in einem Behälter mit explosionsfähiger Atmosphäre, insbesondere zur Schädlingsbekämpfung, umfassend:
- ein Gehäuse, das mindestens eine Lufteinlassöffnung und mindestens eine Luftauslassöffnung aufweist;
- einen Wärmetauschkörper mit sich radial zu einem Grundkörper erstreckenden Wärmetauscherflügeln, wobei der Wärmetauschkörper mindestens ein Heizelement, das sich vorzugsweise in einer Längsrichtung des Wärmetauschkörpers erstreckt, umfasst; und
- eine Strömungsmaschine zur Erzeugung einer Luftströmung im Inneren des Gehäuses, wobei eine Luftströmungsrichtung innerhalb des Gehäuses von der Lufteinlassöffnung über den Wärmetauschkörper zur Luftauslassöffnung führt.

Ein (wesentlicher) Gedanke der Erfindung besteht darin, eine kompakte Heizvorrichtung bereitzustellen, die insbesondere zur bestimmungsgemäßen Verwendung nach ATEX Einstufung (Richtlinie 2014/34/EU) in explosionsgefährdeten Bereichen geeignet ist. Die Heizeinrichtung ist dabei erfindungsgemäß für einen temporären Heizvorgang in einem Behälter mit explosionsfähiger Atmosphäre vorgesehen, um das Innere des Behälters zur (Warmluft-)Entwesung bzw. zur Schädlingsbekämpfung und/oder für eine Austrocknung zu heizen, um die hygienischen Bedingungen innerhalb des Behälters zu verbessern. Unter explosionsfähiger Atmosphäre wird daher eine Atmosphäre in Form einer Wolke aus in der Luft enthaltenem brennbaren Staub verstanden (Zone 21). Um die nötige Sicherheit zu gewährleisten, ist die Heizvorrichtung mehrfach redundant gegen das Entstehen von Funken, Lichtbögen oder unzulässigen Temperaturen, die als Zündquelle wirken könnten, abgesichert. Zudem sind alle nötigen Stellen innerhalb des Gehäuses gegen das Eindringen von Staub konstruktionsbedingt sicher abgedichtet sowie ggf. staubbelastete Oberflächen mehrfach redundant gegen das Überschreiten einer vorabbestimmten Temperatur gesichert, um größtmögliche Sicherheit des Heizvorgangs innerhalb des Behälters mit explosionsfähiger Atmosphäre zu gewährleisten.

In einer Ausführungsform weist der Wärmetauschkörper einen, zylindrischen, Grundkörper auf und/oder eine Vielzahl, vorzugsweise acht, weiter vorzugsweise 16, Wärmetauscherflügel, die um den Grundkörper herum, vorzugsweise radial, angeordnet sind. Die Wärmetauscherflügel können mit dem Grundkörper vorzugsweise integral verbunden sein.

Durch die Anordnung einer Vielzahl von Wärmetauscherflügeln wird es in konstruktiv einfacher und gewichtsparender Bauweise ermöglicht, die Oberfläche des Wärmetauschers und insbesondere die Gesamtfläche der Wärmetauscherflügel zu vergrößern, um einen Wärmeübertrag von dem Wärmetauschkörper auf die Umgebungsluft zu optimieren. Andererseits bilden je zwei Wärmetauscherflügel einen Strömungskanal für die Luft innerhalb des Gehäuses aus, um die Luft für den Wärmeübertrag optimal zu führen.

In einer Ausführungsform weisen die Wärmetauscherflügel jeweils beidseitig eine Vielzahl von, insbesondere der Längsrichtung nach verlaufenden, Lamellen und/oder Noppen auf.

Durch die Strukturierung der Wärmetauscherflügel wird die Oberfläche der Wärmetauscherflügel und damit des Wärmetauschkörpers weiter vergrößert und somit der Wärmeübertrag von dem Wärmetauschkörper auf die Umgebungsluft optimiert. Dadurch kann die Heizvorrichtung effizient heizen. Zudem kann eine Lamelle/Noppenstruktur die Luftströmungseigenschaften und damit den Wärmeübertrag verbessern.

In einer Ausführungsform umfasst der Wärmetauschkörper mehrere, vorzugsweise drei, elektrische Heizelemente zumindest abschnittsweise innerhalb des Grundkörpers des Wärmetauschkörpers.
Die Verwendung von mehreren Heizelementen (statt einem einzigen) hat den Vorteil, dass die elektrische Leistung auf mehrere Lasten verteilt wird, dies kann die Sicherheit des Betriebs weiter erhöhen.

In einer Ausführungsform weist der Wärmetauschkörper eine Vielzahl von Schutzeinrichtungen, insbesondere jeweils in Form mindestens einer (irreversibel auslösenden) Thermosicherung, auf. Wobei die Schutzeinrichtungen dazu ausgebildet sind, beim Überschreiten einer Schwelltemperatur und/oder einer Schwellleistung, eine Energieversorgung des Heizelements zu unterbrechen. Vorzugsweise sind die Schutzeinrichtungen jeweils innerhalb eines eingegossenen Rohres innerhalb des Wärmetauschkörpers angeordnet.
Damit wird sichergestellt, dass die Heizvorrichtung nicht beispielsweise durch Fehlbetrieb und/oder Störung eine bestimmte Temperatur erreichen bzw. erzeugen kann, die dazu ausreichen würde, die explosionsfähige Atmosphäre zu entzünden. Unter einer Schutzeinrichtung kann im Wesentlichen eine Serienschaltung von Thermosicherungen verstanden werden. Die Schutzeinrichtung kann eine metallische Kapselung aufweisen und einen Leistungsschütz umfassen. Löst eine Schutzeinrichtung (oder ein Teil davon) einmal aus, muss die Heizvorrichtung beim Hersteller gewartet werden. Dies dient der zusätzlichen Sicherheit und schützt vor Fremdeingriff und daraus resultierenden Gefahren. Vorzugsweise wird eine Energieversorgung der Heizvorrichtung ab einer Schwelltemperatur von beispielsweise 192 °C bzw. ab einer Schwellleistung von beispielsweise 10 A (irreversibel) unterbrochen. Andere Schwelltemperaturen und/oder Schwellleistungen sind natürlich ebenso erfindungsgemäß realisierbar. Entsprechend andere Schwellwerte können durch entsprechende andere Bemessungen der Bauteile der Schutzeinrichtung an die Bedingungen der explosionsfähigen Atmosphäre angepasst werden. Die Schutzeinrichtung kann dabei entweder integral mit dem Wärmetauschköper verbunden sein, vorzugsweise gekapselt in den Wärmetauschkörper eingegossen sein oder in eine nachträglich eingefügte Bohrung in den Wärmetauschkörper eingebracht werden. Dies dient der Sicherheit. Bauteile, die bei einer Fehlfunktion Zündfunken erzeugen könnten, sind in Vergussmasse eingebettet oder derart verbracht, dass ein Funke nicht in die explosionsfähige Atmosphäre in dem Behälter durchtreten kann.

In einer Ausführungsform weist der Wärmetauschkörpers an einem axialen Ende eine Kopplungseinrichtung auf, wobei der Wärmetauschkörper mit der Strömungsmaschine über die Kopplungseinrichtung verbindbar ist.
Dadurch wird eine kompakte und stabile Bauform der Heizvorrichtung ermöglicht. Das Risiko des Auftretens von mechanischen Fehlern, die durch eine Instabilität zum Entstehen von Zündquellen führen könnten, wird dadurch minimiert. Dadurch kann der Betrieb der Heizvorrichtung weiter erhöht werden.

In einer Ausführungsform weist die Kopplungseinrichtung ferner Einführungsstellen auf, wobei die Einführungsstellen ein Einführen von Anschlussleitungen ermöglichen, derart, dass die Heizelemente und/oder die Strömungsmaschine mit den Anschlussleitungen zur Energieversorgung verbindbar sind, wobei die Einführungsstellen vorzugsweise explosionsgeschützte Kabelverschraubungen umfassen.
Bei einer Verbindung von Strömungsmaschine und Wärmetauschkörper ist es möglich, in einem Hohlraum der Kopplungseinrichtung Anschlüsse für die Strömungsmaschine und den Wärmetauschkörper gemeinsam unterzubringen. Derart werden die elektronischen Anschlüsse zur Energieversorgung der Heizvorrichtung zentralisiert. Das Risiko des Auftretens von mechanischen und/oder elektronischen Fehlern, die zum Entstehen von Zündquellen führen können, ist damit örtlich begrenzt und somit weiter minimiert. Die Einführungen in den Hohlraum der Kopplungseinrichtung sind durch die explosionsgeschützten Kabelverschraubungen derart ausgestaltet, dass eine Übertragung von Funken, die durch eine Fehlfunktion auftreten könnten, nach außen verhindert wird. Insgesamt wird die Sicherheit für einen Betrieb der Heizvorrichtung dadurch weiter erhöht.

In einer Ausführungsform bilden die Wärmetauscherflügel und der Grundkörper des Wärmetauschkörpers eine monolithische, insbesondere gegossene, Einheit, vorzugsweise aus Aluminium und/oder einer Aluminiumlegierung.
Derart wird einerseits eine leichte sowie stabile und thermisch gut leitende Verbindung geschaffen. Durch eine monolithische Ausgestaltung werden zudem kleine Spalte, Nuten oder ähnliches vermieden (die bei nicht-monolithischen Verbindungen auftreten), durch die Staub eintreten könnte. Andererseits sind dadurch auch Bauteile, die bei einer Fehlfunktion Zündfunken erzeugen könnten, derart in Vergussmasse eingebettet und isoliert, so dass ein Funke nicht in die explosionsfähige Atmosphäre in dem Behälter durchtreten kann. Insgesamt wird die Sicherheit der Heizvorrichtung dadurch weiter erhöht.

In einer alternativen Ausführungsform bilden der Wärmetauschkörper und die Heizelemente eine monolithische, insbesondere vergossene, Einheit.
Derart wird einerseits eine leichte sowie stabile und thermisch gut leitende Verbindung geschaffen. Durch eine monolithische Ausgestaltung werden zudem kleine Spalte, Nuten oder ähnliches vermieden (die bei nicht-monolithischen Verbindungen auftreten), durch die Staub eintreten könnte. Andererseits sind dadurch die Heizelemente, die bei einer Fehlfunktion Zündfunken erzeugen könnten, in Vergussmasse eingebettet und isoliert, so dass ein Funke nicht in die explosionsfähige Atmosphäre in dem Behälter durchtreten kann. Insgesamt wird die Sicherheit der Heizvorrichtung dadurch weiter erhöht.
In einer Ausführungsform weist der Wärmetauschkörper eine Länge in der Längsrichtung von mindestens 400 mm, vorzugsweise mindestens 500 mm, weiter vorzugsweise mindestens 600 mm und/oder einen Gesamtdurchmesser von mindestens 200 mm, vorzugsweise mindestens 300 mm, weiter vorzugsweise mindestens 350 mm, auf.
Mit den vorliegenden Dimensionierungen der Heizvorrichtung wird einerseits erreicht, dass die Heizvorrichtung und insbesondere der Wärmetauschkörper groß genug ist, um größere Volumina von beispielsweise Silos effizient zu heizen. Andererseits werden diese Dimensionierungen der Heizvorrichtung und insbesondere des Wärmetauschkörpers kompakt gehalten, damit die Heizvorrichtung bequem durch eine Öffnung in einen Behälter eingebracht werden kann und um das Gewicht der Heizvorrichtung verhältnismäßig gering zu halten. Das geringe Gewicht der Heizvorrichtung bietet einerseits den Vorteil, dass die Heizvorrichtung gut in den Behälter einhängbar und/oder einbringbar ist, ohne die dazu nötigen Komponenten unnötig hoch zu belasten und andererseits zu gewährleisten, dass die Heizvorrichtung besonders mobil ist. Vorzugsweise soll die mobile Heizvorrichtung ein Gewicht von unter 100 kg oder höchstens 100 kg aufweisen.

In einer Ausführungsform liegt ein Verhältnis des Durchmessers des Grundköpers des Wärmetauschkörpers zu dem Gesamtdurchmessers des Wärmetauschkörpers in einem Bereich von 0,2 bis 0,5.
Dadurch wird über die Struktur erreicht, dass das Gewicht der Heizvorrichtung gering gehalten wird, auch um die zuvor genannten Vorteile zu erzielen, in dem der Durchmesser des Grundkörpers bzw. der Nabe (und damit das entsprechende Gewicht) verhältnismäßig klein gegenüber dem Gesamtdurchmesser des Wärmetauschers ist. Weiterhin wird dadurch erreicht, dass die Wärmetauscherflügel eine große Fläche einnehmen, um den Wärmeübertrag des Wärmetauschkörpers auf die zu heizende Luft zu optimieren. Damit wird die Effizienz der Heizvorrichtung optimiert.

In einer Ausführungsform weist die Heizvorrichtung Tragelemente auf, die dazu ausgebildet sind, dass die Heizvorrichtung in den Behälter mit explosionsfähiger Atmosphäre einhängbar ist, vorzugsweise derart, dass eine vertikale Luftströmung innerhalb des Behälters mit explosionsfähiger Atmosphäre erzeugbar ist.
Beispielsweise kann das Einhängen der Heizvorrichtung in den Behälter über eine (Silo-)Einfahrtwinde erfolgen. Derart kann einerseits erreicht werden, dass die Heizvorrichtung nicht dauerhaft in dem Behälter untergebracht werden muss und nur für den Heizprozess in den Behälter eingebracht bzw. eingehängt werden kann. Derart wird ermöglicht, dass die Heizvorrichtung nicht während eines Befüll- oder Entleervorgangs des Behälters in dem Behälter ist. Dies dient einerseits der Sicherheit und spart Platz in dem Behälter und ermöglicht die Heizvorrichtung außerhalb des Behälters zu warten und/oder zu säubern. Bevorzugt wird die Heizvorrichtung nach dem Entleeren des Behälters zu einer Entwesung bzw. Schädlingsbekämpfung und/oder zur Austrocknung in den Behälter eingehängt. Zur weiteren Erhöhung der Sicherheit wird die Heizvorrichtung bevorzugt nur bei Betriebsstillstand in den Behälter zur Schädlingsbekämpfung und/oder Austrocknung eingehängt. Weiterhin wird durch die Mobilität der Heizvorrichtung bzw. durch das Einhängen der Heizvorrichtung in den Behälter erreicht, dass eine Position der Heizvorrichtung in dem Behälter, beispielsweise auf eine optimale Luftströmung, optimiert werden kann. Eine optimale Position, beispielsweise eine optimale Höhe, der Heizvorrichtung kann somit den Heizvorgang verkürzen und damit Energie sparen. Bevorzugt kann die Heizvorrichtung beispielsweise etwas unterhalb der Mitte, bezogen auf die Höhe, des Behälters gehängt werden, um die Luftzirkulation energetisch in Bezug auf die natürliche Thermik zu optimieren. Zusätzlich wird durch das Einhängen der Heizvorrichtung in den Behälter ein Kontakt der Heizvorrichtung mit den Außenwänden des Behälters vermieden und eine gewisse Entfernung erreicht, um eine elektrostatische Entladung auf Grund unterschiedlicher Potentiale von Heizvorrichtung und Behälter zu vermeiden. Dies dient zusätzlich der Sicherheit. Für größere Behälter können auch weitere (zusätzliche) Heizvorrichtungen eingehängt werden. Beispielsweise können zwei Heizvorrichtungen eingehängt werden, die sich vorzugsweise in ihrer jeweiligen Ausrichtung in Bezug auf den jeweils erzeugten Luftstrom unterscheiden. Beispielsweise kann eine erste Heizvorrichtung einen nach oben gerichteten Luftstrom erzeugen und eine zweite Heizvorrichtungen einen nach unten gerichteten Luftstrom erzeugen. Die Heizvorrichtungen können sich dabei in ihrer relativen Einhänghöhe unterscheiden. Derart wird eine optimale Luftzirkulation und schnelles Entwesen und/oder Austrockenen des Behälters ermöglicht. Um den Vorgang des Entwesens und/oder Austrocknens weiter zu optimieren kann eine Ausrichtung der einen oder der mehreren Heizvorrichtungen in dem Behälter nach einer gewissen Zeit mit Hilfe der Einfahrtswinde variiert (beispielsweise um 180° gedreht) werden.

In einer Ausführungsform weist die Heizvorrichtung mindestens einen ersten Temperatursensor, der innerhalb des Wärmetauschkörpers angeordnet ist, auf. Wobei der erste Temperatursensor dazu ausgebildet ist, eine Temperatur des Wärmetauschkörpers zu detektieren. Alternativ oder zusätzlich weist die Heizvorrichtung in einer Ausführungsform mindestens einen zweiten Temperatursensor auf, der innerhalb des Gehäuses angeordnet ist. Wobei der zweite Temperatursensor dazu ausgebildet ist, eine Temperatur der Umgebungsluft zu detektieren.
Durch die Detektion von einer Temperatur an mehreren Stellen kann die Sicherheit des Betriebs der Heizvorrichtung besonders erhöht werden. Zudem können die Temperatursensoren in einen Regelkreis zur Regelung der Temperatur eingebunden werden. Es ist zu beachten, dass eine explosionsfähige Atmosphäre eine entsprechende Zünd- und/oder Glimmtemperatur aufweisen. Beispielsweise kann für eine explosionsfähige Atmosphäre eine Zündtemperatur oberhalb von 275 °C aufweisen. Zur Schädlingsbekämpfung wird eine Temperatur zwischen ca. 45 °C bis 60 °C benötigt. Durch die Möglichkeit der Detektion der Temperatur wird somit einerseits gewährleistet, dass die nötige Temperatur zur Schädlingsbekämpfung innerhalb des Behälters und/oder zur Trocknung des Behälters erreicht und geregelt wird. Andererseits wird es dadurch zusätzlich ermöglicht, eine Überschreitung der Zündtemperatur zu verhindern. Vorzugsweise werden die Temperatursensoren derart, vorzugsweise in entsprechenden metallischen Leerrohren verbracht, vergossen oder in Bohrungen verbracht, dass eine Übertragung von Funken, die durch eine Fehlfunktion auftreten könnten, nach außen verhindert wird. Insgesamt wird die Sicherheit durch die Temperatursensoren erhöht sowie eine Regelung der Temperatur ermöglicht.

In einer Ausführungsform umfasst die Heizvorrichtung eine Fernsteuereinrichtung, die dazu ausgebildet ist, die Heizvorrichtung zu steuern, wobei die Fernsteuereinrichtung außerhalb des Behälters mit explosionsfähiger Atmosphäre, vorzugsweise in einem nicht durch Staubexplosion gefährdeten Bereich, anordenbar ist.
Dadurch wird erreicht, dass der wesentliche Anteil der Elektronik, der für einen Betrieb der Heizvorrichtung nötig ist, außerhalb des Gefahrenbereichs angeordnet ist. Mögliche Zündquellen, die zu einer Explosion des Behälters führen könnten, werden somit weiter auf ein Minimum reduziert. Derart kann der Betrieb der Heizvorrichtung sicherer gestaltet werden.

In einer Ausführungsform ist die Fernsteuereinrichtung zur Regelung und/oder Überwachung der Temperatur des Wärmetauschkörpers und/oder der Temperatur der Umgebungsluft ausgebildet, derart, dass die Temperatur der Umgebungsluft im Inneren des Behälters in einem Bereich von 55 bis 65°C, vorzugsweise 58° bis 60°, regelbar ist.
Derart wird es ermöglicht, die (Warmluft-)Entwesung des Behälters hinsichtlich der Temperatur und der Zeit zu optimieren - ab einer Temperatur von ca. 45° C bis 50 °C tritt eine Koagulierung von Körpereiweiß von Schädlingen auf und führt zum Absterben der Organismen und Eiablagerungen innerhalb weniger Stunden. Gleichzeitig wird überwacht bzw. geregelt, dass eine Schwelltemperatur bzw. Zündtemperatur der explosionsfähigen Atmosphäre nicht überschritten wird. Folglich wird durch die Regelung und/oder Überwachung durch die Fernsteuereinrichtung also der Vorgang der Schädlingsbekämpfung optimiert und gleichzeitig die nötige Sicherheit hinsichtlich des Explosionsschutzes gewährleistet.

Insbesondere wird die erfindungsgemäße Aufgabe auch durch ein Verfahren zur Herstellung eines Wärmetauschkörpers einer Heizvorrichtung zur Verwendung in einem Behälter mit explosionsfähiger Atmosphäre, insbesondere zur Schädlingsbekämpfung, gelöst, wobei das Verfahren folgende Schritte umfasst:
- Bereitstellen eines Negativs für einen Wärmetauschkörper, das Ausgusszonen für einen, vorzugsweise radialen, Grundkörper sowie für eine Vielzahl von, vorzugsweise radial um den Grundkörper angeordneten, Wärmetauscherflügeln, umfasst;
- Bereitstellen von mehreren, vorzugsweise drei, Heizelementen in einer Ausgusszone für den Grundkörper;
- Ausgießen des Wärmetauschkörpernegatives mit einer aushärtbaren Masse derart, dass die Heizelemente zumindest teilweise umgossen werden, vorzugsweise vollumgossen werden.
Hieraus ergeben sich dieselben Vorteile wie sie bereits in Zusammenhang mit der Vorrichtung beschrieben wurden.
Insgesamt dient das Verfahren zur Herstellung des Wärmetauschkörpers der Sicherheit im Betrieb der Heizvorrichtung, die den Wärmetauschkörper umfasst. Durch das Gießen des Wärmetauschkörpers werden Bauteile, die bei einer Fehlfunktion Zündfunken erzeugen könnten, in Vergussmasse eingebettet, so dass ein Funke nicht in die explosionsfähige Atmosphäre in dem Behälter durchtreten kann. Dadurch wird vor Explosionen geschützt. Schäden an Personen und/oder Geräten können vermieden werden.

In einer Ausführungsform umfasst die aushärtbare Masse ein flüssiges Metall, vorzugsweise Aluminium oder Magnesium, und/oder eine flüssige Legierung umfassend Aluminium und/oder Kupfer und/oder Magnesium.
Durch Aluminium als Hauptbestandteil der aushärtbaren Masse wird auf Grund der geringen Dichte von Aluminium erreicht, dass das Gewicht des Wärmetauschkörpers geringgehalten wird. Ferner bietet Aluminium oder Magnesium eine hohe thermische Leitfähigkeit. Wird eine Legierung zum Gießen verwendet, können weitere Zusätze wie etwa 4 % Kupfer und/oder weitere Zusätze, darunter Titan und Magnesium oder weitere Elemente, in geringen Mengen die Gießbarkeit verbessern. Ferner können die Zusätze der Legierung auf die Aushärtbarkeit sowie die Festigkeit des Wärmetauschkörpers optimiert werden. Vorzugsweise enthält eine verwendete Legierung mindestens 70%, vorzugsweise mindestens 80%, weiter vorzugsweise mindestens 90% Aluminium, noch weiter vorzugsweise mindestens 95% Aluminium, um das Gewicht des Wärmetauschkörpers gering zu halten. Bereiche und/oder Elemente beispielsweise elektrische Kontaktierungsbereiche und/oder Kontaktierungselemente des Wärmetauschkörpers, die durch das Ausgießen auf Grund der hohen Temperatur beschädigt werden könnten, werden vor dem Ausgießen entsprechend isoliert, vorzugsweise durch Aufbringen einer Glasseiden-Isolierung vor dem Schritt des Ausgießens.

In einer Ausführungsform umfasst das Negativ für den Wärmetauschkörper ferner eine Ausgusszone für eine Kopplungseinrichtung des Wärmetauschkörpers, wobei die Ausgusszone für die Kopplungseinrichtung mindestens einen Hohlraum umfasst, in dem axiale Enden der Heizelemente angeordnet sind bzw. werden, derart, dass die axialen Enden der Heizelemente nach dem Ausgießen des Negatives für den Wärmetauschkörper kontaktierbar sind.
Die axialen Enden der Heizelemente sind vorzugsweise nur durch entsprechende Kontaktierungselemente und/oder Kontaktierungsbereiche der Heizelemente gebildet, also durch Bereiche bzw. Elemente die lediglich zur Stromversorgung und nicht selbst zum aktiven Heizen dienen. Dadurch wird erreicht, dass der Wärmetauschkörper, der durch das Verfahren hergestellt wird, möglichst wenig Nachbearbeitungsschritte braucht und der Wärmetauschkörper mechanisch und elektrisch kontaktierbar ist. Dies spart Kosten in der Herstellung.

In einer Ausführungsform umfasst das Verfahren einen Schritt in dem ein Leerrohr in den Wärmetauschkörper zumindest teilweise eingegossen wird, wobei innerhalb des Leerrohrs ein erster Temperatursensor und/oder eine Schutzeinrichtung angeordnet ist.
Hieraus ergeben sich dieselben Vorteile wie sie bereits in Zusammenhang mit der Vorrichtung beschrieben wurden.
Weitere vorteilhafte Ausführungsformen ergeben sich anhand der Unteransprüche.
Nachfolgend wird die Erfindung auch hinsichtlich weiterer Merkmale und Vorteile anhand von Ausführungsbeispielen beschrieben, die anhand einer Abbildung näher erläutert werden.

Hierbei zeigt:
- Fig. 1: eine perspektivische Darstellung eines erfindungsgemäßen Wärmetauschkörpers.
- Fig. 2: eine Explosionsansicht der erfindungsgemäßen Heizvorrichtung (ohne Gehäuse).
- Fig. 3: eine schematische Seitenansicht der erfindungsgemäßen Heizvorrichtung.
- Fig. 4: eine schematische Darstellung der erfindungsgemäßen Verwendung einer Heizvorrichtung in einem Behälter mit explosionsfähiger Atmosphäre.

In der nachfolgenden Beschreibung werden für gleiche und gleich wirkende Teile dieselben Bezugsziffern verwendet.

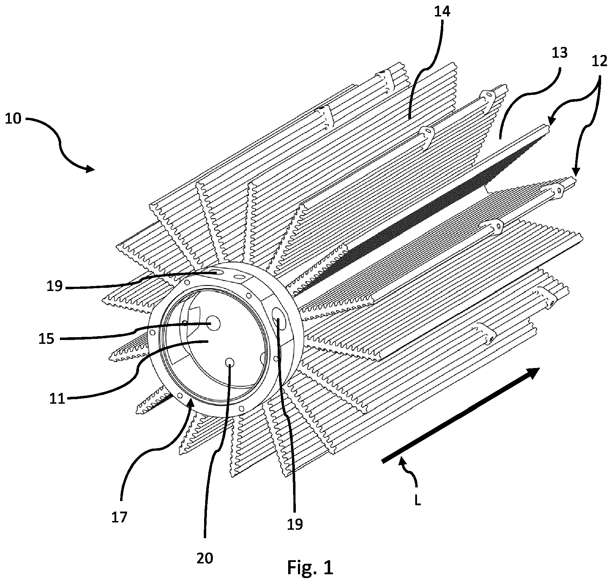

Figur 1 zeigt ein Ausführungsbeispiel eines monolithischen gegossenen Wärmetauschkörpers 10. In dem Ausführungsbeispiel von Fig. 1 weist der Wärmetauschkörper einen Grundkörper bzw. Nabe 11 mit einem Durchmesser von ca. 145 mm auf.

Um den Grundkörper 11 herum sind 16 Wärmetauscherflügel 12 radial angeordnet, die sich in einer Längsrichtung L des Wärmetauschkörpers 10 erstrecken.

Die Gesamtlänge des Wärmetauschkörpers in der Längsrichtung L weist ca. 700 mm auf. Wobei sich die Wärmetauscherflügel 12 im Wesentlichen über die gesamte Länge in der Längsrichtung L über den Grundkörper erstrecken. In dem Ausführungsbeispiel von Fig. 1 haben die Wärmetauscherflügel 12 eine Länge von ca. 600 mm in der Längsrichtung L.

Der Gesamtdurchmesser des in Fig. 1 gezeigten Wärmetauschkörpers 10 beträgt ca. 400 mm.

Damit ergibt sich für den Wärmetauschkörper 10 aus der Fig. 1 eine Gesamtfläche der Wärmetauscherflügel 12 von über 2 m² für den Wärmeübertrag.

Diese Gesamtfläche der Wärmetauscherflügel 12 wird für eine Optimierung des Wärmeübertrags durch Lamellen 14 auf jeder Seite der Wärmetauscherflügel 12 weiter erhöht. Die Lamellen 14 in Fig. 1 sind auf jedem der Wärmertauscherflügel 12 beidseitig vorhanden und in der Längsrichtung L verlaufend ausgerichtet.

Zwei benachbarte Wärmetauscherflügel 12 bilden jeweils einen Strömungskanal 13 aus, in denen die zu erwärmende Luft geführt werden kann.

An einem axialen Ende (der Längsrichtung L) weist der Wärmetauschkörper 10 eine Kopplungseinrichtung 17 auf. Über die Kopplungseinrichtung 17 ist der Wärmetauschkörper 10 mit der Strömungsmaschine 40 verbindbar.

Die Kopplungseinrichtung 17 weist Einführungsstellen 19 auf, um ein Einführen von Kabeln zu ermöglichen. Vorzugsweise umfassen die Einführungsstellen 19 explosionsgeschützte Kabelverschraubungen (nicht dargestellt).

In den Grundkörper 11 sind drei Heizelemente 15 eingegossen, die entlang der Längsrichtung L des Wärmetauschkörpers 10 verlaufen. Die Heizelemente 15 können innerhalb der Kopplungseinrichtung 17 zur Energieversorgung über entsprechende (nicht gezeigte) Kontakte kontaktiert werden.

Ferner umfasst der Grundkörper 11 in einem Ausführungsbeispiel mindestens ein eingegossenes Leerrohr 20, das in Längsrichtung L des Wärmetauschkörpers verläuft. In dem Leerrohr 20 können Schutzeinrichtungen 16 und/oder Temperatursensoren angeordnet sein.

Unter einer Schutzeinrichtung kann im Wesentlichen eine Serienschaltung von Thermosicherungen (beispielsweise Modell E4A00192C von Thermodisc) verstanden werden. Die Schutzeinrichtung kann einen metallischen Mantel aufweisen und einen Leistungsschütz umfassen. Die Schutzeinrichtung erstreckt sich vorzugsweise im Wesentlichen über die gesamte Länge des Wärmetauscher 10 in Längsrichtung L.

Löst eine Schutzeinrichtung (oder eine einzige Thermosicherung davon) einmal aus, muss die Heizvorrichtung beim Hersteller gewartet werden. Vorzugsweise wird eine Energieversorgung der Heizvorrichtung ab einer Schwelltemperatur von beispielsweise 192 °C bzw. ab einer Schwellleistung bzw. Grenzleistung von beispielsweise 10 A (irreversibel) unterbrochen.

In einem Ausführungsbeispiel kann eine Schutzeinrichtung 16 jeweils in Form von drei seriell geschalteten, irreversibel auslösenden Thermosicherungen ausgebildet sein. In diesem Ausführungsbeispiel kann jeweils eine erste der drei Thermosicherungen an dem axialen Ende (nahe der Kopplungseinrichtung 17) des Wärmetauschers, eine zweite Thermosicherung in der Mitte des Wärmetauschköpers 10 und eine dritte Thermosicherung nahe dem gegenüberliegenden Ende des Wärmetauschkörpers 10 angeordnet sein.

Insgesamt weist der Wärmetauschkörper 10 in diesem Beispiel neun Thermosicherungen verteilt auf drei Schutzeinrichtungen 16 auf, die bei einem (lokalen) Überschreiten einer Schwelltemperatur des Wärmetauschkörpers 10 von beispielsweise 192 °C, eine Energieversorgung des Wärmetauschkörpers 10 unterbrechen.

Jeweils eine Schutzeinrichtung 16 kann dabei in einem Leerrohr 20 innerhalb des Wärmetauschkörpers in Längsrichtung eingegossen sein.

Die Schutzeinrichtungen 16 können innerhalb der Kopplungseinrichtung 17 zur Versorgung (bzw. Messung) über entsprechende (nicht gezeigte) Kontakte kontaktiert werden. Schalttechnisch können die Schutzeinrichtungen 16 mit den Heizelementen 15 (seriell) versorgt werden oder über einen eigenen separaten Niedervolt-Schaltkreis verfügen. Entsprechende Kabel für die Schutzeinrichtungen 16 können über die Einführungsstellen 19 zugeführt werden.

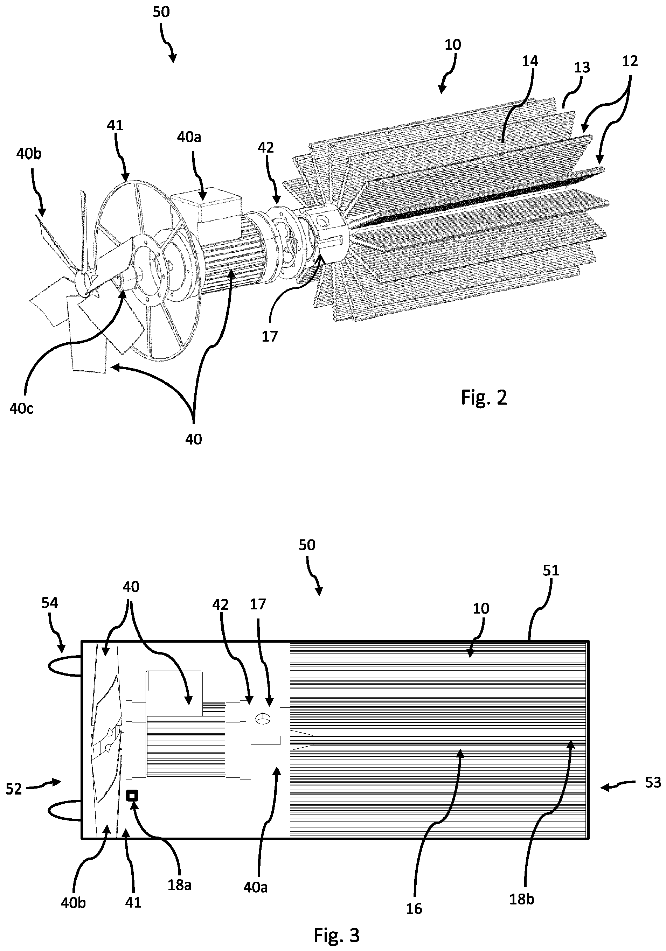

Figur 2 zeigt eine Explosionsansicht der erfindungsgemäßen Heizvorrichtung (Gehäuse nicht dargestellt). In Fig. 2 ist eine Strömungsmaschine 40 dargestellt. Die Strömungsmaschine 40 umfasst einen Motor 40a sowie einen Ventilator 40b zur Erzeugung einer Luftströmung. Der Ventilator 40b ist aus Kunststoff ausgebildet, um Gewicht zu sparen. Der Ventilator 40b ist mit einer Ventilatornabe 40c an einer metallischen Motorwelle des Motors 40a befestigt.

Der Motor 40a ist speziell ausgebildet zur Verwendung innerhalb explosionsfähiger Atmosphären der Zone 21. Der Motor 40a umfasst zudem eine Vitondichtung, damit eine Temperaturbeständigkeit von bis zu 200 °C gewährleistet ist.

Die Strömungsmaschine 40 ist über einen Flansch 42 mit der Kopplungseinrichtung 17 des Wärmetauscherkörpers 10 verbunden.

In einem Ausführungsbeispiel kann die Verbindung zwischen der Strömungsmaschine 40 und dem Wärmetauschkörper 10 mindestens eine Lage Thermopapier bzw. eine dünne isolierende Schicht umfassen, um die Verbindung besonders dicht zu gestalten und einen Wärmeübertrag von dem Wärmetauschkörper 10 auf den Motor 40a möglichst gering zu halten. Vorzugsweise umfasst das Thermopapier und/oder die dünne isolierende Schicht Carbon und/oder ein Carbongewebe.

Die Heizvorrichtung 50 umfasst weiter mindestens einen Befestigungsring 41 an dem ein Gehäuse 51 der Heizvorrichtung befestigt werden kann. In einem Ausführungsbeispiel ist der Befestigungsring 41 mit der Strömungsmaschine 40 verbunden.

Figur 3 zeigt ein Ausführungsbeispiel der Heizvorrichtung 50 in einer schematischen Seitenansicht. In dem Ausführungsbeispiel umfasst die Heizvorrichtung 50 ein zylindrisches Gehäuse 51 aus Metall.

Das Gehäuse 51 ist über (nicht gezeigte) Befestigungseinrichtungen mit dem Befestigungsring 41 verbunden.

Nahe des Ventilators 40b weist das Gehäuse mindestens eine Lufteinlassöffnung 52 auf. Auf der gegenüberliegenden Seite der Lufteinlassöffnung umfasst das Gehäuse mindestens eine Luftauslassöffnung 53.

Zudem weist das Gehäuse 51 auf der Seite nahe des Ventilators 40b Tragelemente 54 auf. Die Tragelemente 54 sind dazu ausgebildet, die Heizvorrichtung 50 daran aufzuhängen oder daran hochzuheben.

Die Heizvorrichtung 50 umfasst in einem Ausführungsbeispiel ferner (mindestens) zwei Temperatursensoren 18a und 18b.

Ein erster Temperatursensor 18a ist innerhalb des Gehäuses 51, beispielsweise an einer Speiche (siehe Fig. 2) des Befestigungsrings 41, angebracht. Der erste Temperatursensor 18a ist dabei als Kabel-Widerstandsthermometer ausgebildet. Der erste Temperatursensor 18a dient zur Detektion einer Temperatur der Umgebungsluft bzw. Ansaugluft, die in das Gehäuses 51 eingesaugt wird.

Ein zweiter Temperatursensor 18b ist innerhalb des Wärmetauschkörpers 10 angeordnet. Dabei kann der zweite Temperatursensor 18b in eine metallische Vorrichtung eingekapselt sein, beispielsweise ist die metallische Vorrichtung ein Leerrohr 20, das in den Wärmetauscher eingegossen ist. In alternativen Ausführungsformen, kann der zweite Temperatursensor 18b durch eine Bohrung in den Wärmetauschkörper eingebracht werden. Der zweite Temperatursensor 18b ist als Widerstandstemperaturfühler ausgebildet. Der zweite Temperatursensor 18b dient zur Detektion einer Temperatur des Wärmetauschkörpers 10.

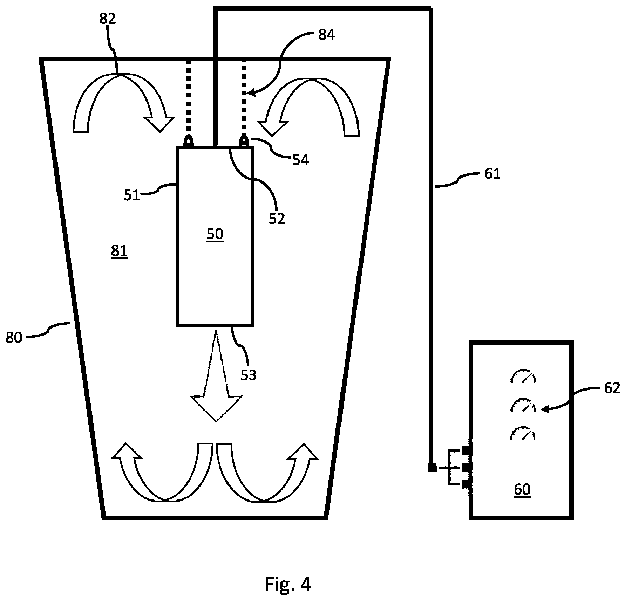

Figur 4 zeigt eine schematische Darstellung der erfindungsgemäßen Verwendung einer Heizvorrichtung in einem Behälter mit explosionsfähiger Atmosphäre 80.

Die Heizvorrichtung 50 wird durch ein Mannloch eingebracht und in das Innere des Behälters 81 eingehängt. Dafür können Hängevorrichtungen 84 bereitgestellt werden. Diese Hängevorrichtungen 84 können dabei Teil des Behälters 80 oder von einer (nicht gezeigten) Transporteinrichtung, wie einer Siloeinfahrtwinde, bereitgestellt werden.

Die Heizvorrichtung 50 wird derart in den Behälter 80 eingehängt, dass die Lufteinlassöffnung 52 oberhalb der Luftauslassöffnung 53 liegt. Derart erzeugt die Heizvorrichtung einen vertikal zirkulierenden Luftstrom 82 im Inneren des Behälters 81. Bevorzugt kann die Heizvorrichtung etwas unterhalb der Mitte, bezogen auf die Höhe, des Behälters gehängt werden, um die Luftzirkulation energetisch in Bezug auf die natürliche Thermik zu optimieren.

Für größere Behälter 80 (also ab einem bestimmten Volumen) können auch weitere (zusätzliche) Heizvorrichtungen 50 in den Behälter eingehängt werden.

Beispielsweise können in einem Ausführungsbeispiel zwei Heizvorrichtungen 50 eingehängt werden (nicht gezeigt), die sich vorzugsweise in ihrer jeweiligen Ausrichtung in Bezug auf den jeweils erzeugten Luftstrom 82 unterscheiden. Beispielsweise kann eine erste Heizvorrichtung 50 einen nach oben gerichteten Luftstrom 82 erzeugen (Luftauslassöffnung 53 liegt über der Lufteinlassöffnung 52) und eine zweite Heizvorrichtungen 50 einen nach unten gerichteten Luftstrom 82 (Luftauslassöffnung 53 liegt unterhalb der Lufteinlassöffnung 52) erzeugen. Die Heizvorrichtungen 50 können sich dabei in ihrer relativen Einhänghöhe unterscheiden.

In einem weiteren Ausführungsbeispiel ist es auch möglich, dass eine (oder mehrere) Heizvorrichtungen 50 quer eingehängt wird, so dass Lufteinlassöffnung 53 und Lufteinlassöffnung 52 auf der gleichen Höhe zu liegen kommen. Dadurch kann auch ein horizontaler Luftstrom 82 innerhalb des Behälters 80 erzeugt werden.

Eine Ausrichtung der (oder der mehreren) Heizvorrichtung(en) 50 in dem Behälter 80 kann nach einer gewissen Zeit mit Hilfe der Einfahrtswinde variiert (beispielsweise um 180° gedreht) werden. Für eine sichere Drehung der Heizvorrichtung 50 kann die Heizvorrichtung zusätzlich mit Winden am Boden des Behälters gesichert werden.

Eine Energieversorgung für die Heizvorrichtung 50 wird dabei über die Fernsteuereinrichtung 60 bereitgestellt. Vorzugsweise wird Drehstrom für die Energieversorgung der Heizvorrichtung 50 bereitgestellt.

Die Fernsteuervorrichtung 60 umfasst dabei auch Regel- und/oder Steuereinheiten zum Regeln und/oder Steuern der Heizvorrichtung 50. Die Heizvorrichtung 50 ist sowohl zum Steuern/Regeln als auch zur Energieversorgung über Anschlussleitungen 61 mit der Fernsteuereinrichtung 60 verbunden. Ein Drehsinn-Relais ermöglicht einen Betrieb der Heizvorrichtung lediglich mit korrektem Drehstromrichtung des verwendeten Drehstroms. Dadurch wird sichergestellt, dass bei einem Anlegen einer falschen Drehrichtung eines Drehstroms die Heizvorrichtung 50 nicht in Betrieb genommen werden kann, um auszuschließen, dass die Strömungsmaschine 40 eine unzulässige Drehrichtung hat.

Die Fernsteuereinrichtung 60 umfasst Anzeigeeinrichtungen 62, die dazu ausgebildet sind, entsprechende Temperaturen und/oder Temperaturverläufe der ersten Temperaursensoren 18a und der zweiten Temperatursensoren 18b zu visualisieren.

Ist die Heizvorrichtung 50 in den Behälter 80 eingebracht, startet die Fernsteuervorrichtung 60 und/oder ein Benutzer die Heizvorrichtung 50 derart, dass zunächst ein Kaltlauf erfolgt. Bei dem Kaltlauf wird zunächst, für ca. 10 Minuten, lediglich die Strömungsmaschine 40 gestartet, so dass sich ggf. vorhandener Staub in dem Behälter 80 senken kann.

Im Anschluss wird der Heizvorgang zum Heizen des Inneren des Behälters gestartet. Die Fernsteuereinrichtung 60 regelt dabei die Temperatur die im Inneren des Behälters 81 erzeugt wird über den mindestens einen ersten Temperatursensor 18a und über den mindestens einen zweiten Temperatursensor 18b.

Der erste Temperatursensor 18a detektiert eine Heizelementtemperatur der Heizelemente 15 im Inneren des Wärmetauschkörpers 10. Die Heizelementtemperatur ist fest eingestellt, beispielsweise auf 170°C. Überschreitet die Heizelementtemperatur 170°C, unterbricht die Fernsteuereinrichtung 60 die Energieversorgung der Heizelemente 15, um den Heizvorgang zu unterbrechen, während der Ventilator weiterläuft, um die Luftströmung 82 aufrechtzuerhalten. Sinkt die Heizelementtemperatur der Heizelemente 15 um einen bestimmten Betrag, beispielsweise um 2°C, schaltet die Fernsteuereinrichtung 60 die Energieversorgung der Heizelemente 15 wieder zu und setzt damit den Heizvorgang fort.

Der zweite Temperatursensor 18b misst die Temperatur der Ansaugluft dem Behälter 80. Die Temperatur der Ansaugluft ist auf einen festen Wert, beispielsweise auf einen Schwellwert von 58°C Maximaltemperatur eingestellt. Wird der Schwellwert überschritten, unterbricht die Fernsteuereinrichtung 60 die Energieversorgung der Heizelemente 15, um den Heizvorgang zu unterbrechen, während der Ventilator weiterläuft, um die Luftströmung 82 aufrechtzuerhalten. Sinkt die tatsächliche Umgebungslufttemperatur um einen bestimmten Betrag, beispielsweise um 2°C, schaltet die Fernsteuereinrichtung 60 die Energieversorgung der Heizelemente 15 wieder zu und setzt damit den Heizvorgang fort.

Derart wird das Innere des Behälters 81 mittels der Heizvorrichtung 50 geregelt für eine Entwesung und/oder Trocknung geheizt. Ab einer Temperatur von ca. 45° C bis 50 °C tritt eine Koagulierung von Körpereiweiß von Schädlingen auf und führt zum Absterben der Organismen und Eiablagerungen innerhalb weniger Stunden. Gleichzeitig wird überwacht und geregelt, dass eine Schwelltemperatur bzw. Zündtemperatur der explosionsfähigen Atmosphäre nicht überschritten wird. Ferner wird mit der Heizvorrichtung 50 erreicht, das eine (evtl. vorhandene) Feuchtigkeit innerhalb des Behälters ausgetrocknet wird. Hat ein Einfüllstoff Fleuchtigkeit gezogen, kann beispielsweise (auch nach Entleeren des Behälters) verklebter bzw. verklumpter Rest von feucht gewordenem Füllstoffs an der Behälterwand zurückbleiben. Durch ein Austrocknen mit der Heizvorrichtung 50 können diese Reste getrocknet und nach dem Heizvorgang ausgekehrt werden. Auch Kondenswasser kann mittels der Heizvorrichtung ausgetrocknet werden. Zudem werden Mikroorganismen abgetötet.

Je nach Behältergröße bzw. Behältervolumen kann eine Dauer zur Entwesung und/oder Trocknung mittels der Heizvorrichtung 50 variieren, üblicherweise zwischen 24 und 96 Stunden.

An dieser Stelle sei darauf hingewiesen, dass alle oben beschriebenen Teile für sich allein gesehen und in jeder Kombination, insbesondere die in den Zeichnungen dargestellten Details, als erfindungswesentlich beansprucht werden. Änderungen hiervon sind dem Fachmann geläufig.

### Bezugszeichen:

- 10: Wärmetauschkörper
- 11: Grundkörper
- 12: Wärmetauscherflügel
- 13: Strömungskanal
- 14: Lamellen
- 15: Heizelement
- 16: Schutzeinrichtung
- 17: Kopplungseinrichtung
- 18a: erster Temperatursensor
- 18b: zweiter Temperatursensor
- 19: Einführungsstellen
- 20: Leerrohr (eingegossen)
- 40: Strömungsmaschine
- 40a: Motor
- 40b: Ventilator
- 40c: Ventilatornabe
- 41: Befestigungsring
- 42: Flansch
- 50: Heizvorrichtung
- 51: Gehäuse
- 52: Lufteinlassöffnung
- 53: Luftauslassöffnung
- 54: Tragelemente
- 60: Fernsteuereinrichtung
- 61: Anschlussleitungen
- 62: Anzeigeeinrichtungen
- 80: Behälter mit explosionsfähiger Atmosphäre
- 81: Innenraum des Behälters mit explosionsfähiger Atmosphäre
- 82: Luftströmung innerhalb des Behälters mit explosionsfähiger Atmosphäre
- 84: Hängevorichtungen
- L: Längsrichtung

## Patentansprüche

1. Heizvorrichtung zur Verwendung in einem Behälter mit explosionsfähiger Atmosphäre, insbesondere zur Schädlingsbekämpfung, umfassend:
• ein Gehäuse (51), das mindestens eine Lufteinlassöffnung (52) und mindestens eine Luftauslassöffnung (53) aufweist;
• einen Wärmetauschkörper (10) mit sich radial zu einem Grundkörper (11) erstreckenden Wärmetauscherflügeln (12), wobei der Wärmetauschkörper (10) mindestens ein Heizelement (15), das sich vorzugsweise in einer Längsrichtung (L) des Wärmetauschkörpers (10) erstreckt, umfasst; und
• eine Strömungsmaschine (40) zur Erzeugung einer Luftströmung im Inneren des Gehäuses (51), wobei eine Luftströmungsrichtung innerhalb des Gehäuses (51) von der Lufteinlassöffnung (52) über den Wärmetauschkörper (10) zur Luftauslassöffnung (53) führt.

2. Heizvorrichtung nach Anspruch 1,
**dadurch gekennzeichnet, dass**
der Wärmetauschkörper (10) einen zylindrischen, Grundkörper (11) aufweist und/oder
eine Vielzahl, vorzugsweise acht, weiter vorzugsweise 16, Wärmetauscherflügeln (12) aufweist, die um den Grundkörper (11) herum angeordnet sind und/oder
die Wärmetauscherflügel (12) mit dem Grundkörper (11) integral verbunden sind.

3. Heizvorrichtung nach Anspruch 1 oder 2,
**dadurch gekennzeichnet, dass**
die Wärmetauscherflügel (12) jeweils beidseitig eine Vielzahl von, insbesondere der Längsrichtung (L) nach verlaufenden, Lamellen (14) und/oder Noppen aufweisen.

4. Heizvorrichtung nach einem der vorherigen Ansprüche,
**dadurch gekennzeichnet, dass**
der Wärmetauschkörper (10) mehrere, vorzugsweise drei, elektrische Heizelemente (15) zumindest abschnittsweise innerhalb des Grundkörpers (11) des Wärmetauschkörpers (10), umfasst.

5. Heizvorrichtung nach einem der vorherigen Ansprüche,
**dadurch gekennzeichne**t, dass
der Wärmetauschkörper (10) eine Vielzahl von Schutzeinrichtungen (16), insbesondere jeweils in Form mindestens einer (irreversibel auslösenden) Thermosicherung aufweist, die dazu ausgebildet sind, beim Überschreiten einer Schwelltemperatur und/oder einer Schwellleistung, eine Energieversorgung des Heizelements (15) zu unterbrechen und vorzugsweise wobei die Schutzeinrichtungen (16) jeweils innerhalb eines eingegossenen Rohres (20) innerhalb des Wärmetauschkörpers (10) angeordnet sind.

6. Heizvorrichtung nach einem der vorherigen Ansprüche,
**dadurch gekennzeichnet, dass**
der Wärmetauschkörper (10) an einem axialen Ende eine Kopplungseinrichtung (17) aufweist, wobei der Wärmetauschkörper (10) mit der Strömungsmaschine (40) über die Kopplungseinrichtung (17) verbindbar ist.

7. Heizvorrichtung nach einem der vorherigen Ansprüche, insbesondere nach Anspruch 6,
**dadurch gekennzeichnet, dass**
die Kopplungseinrichtung (17) ferner Einführungsstellen (19) aufweist, wobei die Einführungsstellen (19) ein Einführen von Anschlussleitungen (61) ermöglichen, derart, dass die Heizelemente (15) und/oder die Strömungsmaschine (40) mit den Anschlussleitungen (61) zur Energieversorgung verbindbar sind, wobei die Einführungsstellen (19) vorzugsweise explosionsgeschützte Kabelverschraubungen umfassen.

8. Heizvorrichtung nach einem der vorherigen Ansprüche,
**dadurch gekennzeichnet, dass**
die Wärmetauscherflügel (12) und der Grundköper (11) des Wärmetauschkörpers (10) eine monolithische, insbesondere gegossene, Einheit, vorzugsweise aus Aluminium und/oder einer Aluminiumlegierung, bilden, und/oder
der Wärmetauschkörper (10) und die Heizelemente (15) eine monolithische, insbesondere vergossene, Einheit bilden.

9. Heizvorrichtung nach einem der vorherigen Ansprüche,
**dadurch gekennzeichnet, dass**
der Wärmetauschkörper (10) eine Länge in der Längsrichtung (L) von mindestens 400 mm, vorzugsweise mindestens 500 mm, weiter vorzugsweise mindestens 600 mm und/oder einen Gesamtdurchmesser von mindestens 200 mm, vorzugsweise mindestens 300 mm, weiter vorzugsweise mindestens 350 mm, aufweist, und/oder
ein Verhältnis des Durchmessers des Grundköpers (11) des Wärmetauschkörpers (10) zu dem Gesamtdurchmessers des Wärmetauschkörpers (10) in einem Bereich von 0.2 bis 0.5 liegt.

10. Heizvorrichtung nach einem der vorherigen Ansprüche,
**dadurch gekennzeichnet, dass**
die Heizvorrichtung (50) Tragelemente (54) aufweist, die dazu ausgebildet sind, dass die Heizvorrichtung in den Behälter mit explosionsfähiger Atmosphäre (80) einhängbar ist, vorzugsweise derart, dass eine vertikale Luftströmung (82) innerhalb des Behälters mit explosionsfähiger Atmosphäre (80) erzeugbar ist.

11. Heizvorrichtung nach einem der vorherigen Ansprüche,
**gekennzeichnet durch**
mindestens einen ersten Temperatursensor (18a), der innerhalb des Wärmetauschkörpers (10) angeordnet ist, wobei der erste Temperatursensor (18a) dazu ausgebildet ist, eine Temperatur des Wärmetauschkörpers (10) zu detektieren und/oder
mindestens einen zweiten Temperatursensor (18b), der innerhalb des Gehäuses (51) angeordnet ist, wobei der zweite Temperatursensor (18b) dazu ausgebildet ist, eine Temperatur der Umgebungsluft zu detektieren.

12. Heizvorrichtung nach einem der vorherigen Ansprüche,
**gekennzeichnet durch**
eine Fernsteuereinrichtung (60), die dazu ausgebildet ist, die Heizvorrichtung (50) zu steuern, wobei die Fernsteuereinrichtung (60) außerhalb des Behälters mit explosionsfähiger Atmosphäre (80), vorzugsweise in einem nicht **durch** Staubexplosion gefährdeten Bereich, anordenbar ist, und/oder
die Fernsteuereinrichtung (60) zur Regelung und/oder Überwachung der Temperatur des Wärmetauschkörpers (10) und/oder der Temperatur der Umgebungsluft ausgebildet ist, derart, dass die Temperatur der Umgebungsluft im Inneren des Behälters in einem Bereich von 55 bis 65°C, vorzugsweise 58° bis 60°, regelbar ist.

13. Verfahren zur Herstellung eines Wärmetauschkörpers einer Heizvorrichtung zur Verwendung in einem Behälter mit explosionsfähiger Atmosphäre (80), insbesondere zur Schädlingsbekämpfung, insbesondere nach einem der vorhergehenden Ansprüche, wobei das Verfahren folgende Schritte umfasst:
• Bereitstellen eines Negativs für einen Wärmetauschkörper (10), das Ausgusszonen für einen, vorzugsweise radialen, Grundkörper (11) sowie für eine Vielzahl von, vorzugsweise radial um den Grundkörper (11) angeordneten, Wärmetauscherflügeln (12) umfasst;
• Bereitstellen von mehreren, vorzugsweise drei, Heizelementen (15) in einer Ausgusszone für den Grundkörper (11);
• Ausgießen des Wärmetauschkörpernegatives mit einer aushärtbaren Masse derart, dass die Heizelemente zumindest teilweise umgossen werden.

14. Verfahren zur Herstellung eines Wärmetauschkörpers nach Anspruch 13,
**dadurch gekennzeichnet, dass**
die aushärtbare Masse ein flüssiges Metall, vorzugsweise Aluminium oder Magnesium, und/oder eine flüssige Legierung umfassend Aluminium und/oder Kupfer und/oder Magnesium umfasst.

15. Verfahren zur Herstellung eines Wärmetauschkörpers nach einem der Ansprüche 13 oder 14,
**dadurch gekennzeichnet, dass**
das Negativ für den Wärmetauschkörper (10) ferner eine Ausgusszone für eine Kopplungseinrichtung (17) des Wärmetauschkörpers (10) umfasst, wobei die Ausgusszone für die Kopplungseinrichtung (17) mindestens einen Hohlraum umfasst, in dem axiale Enden der Heizelemente (15) angeordnet sind bzw. werden, derart, dass die axialen Enden der Heizelemente (15) nach dem Ausgießen des Negatives für den Wärmetauschkörper kontaktierbar sind.
